# EUROPEAN PATENT APPLICATION

(11) **EP 4 723 009 A1**
(43) Date of publication of application: **08.04.2026**
(21) Application number: 24222463.2
(22) Date of filing: 20.12.2024
(51) Int. Cl.: G06Q 10/087, B65G 1/137, B65G 1/04, G01N 29/00, G01N 17/00, G01H 17/00, G01S 5/18

(54) **SYSTEM AND METHOD FOR MONITORING ACOUSTIC SIGNALS AT AN AUTOMATED STORAGE AND RETRIEVAL SYSTEM**

(30) Priority: 07.10.2024 US 202463704091 P
(71) Applicant: AutoStore Technology AS, 5578 Nedre Vats (NO)
(72) Inventor: JOSHI, Parth, 5578 Nedre Vats (NO); FJELDHEIM, Ivar, 5578 Nedre Vats (NO)
(74) Representative: Kilburn & Strode LLP

(57) **Abstract**

The disclosure relates to a monitoring system configured to monitor acoustic signals at an automated storage and retrieval system in which one or more robotic vehicles move. The monitoring system comprises an acoustic sensor configured to be arranged on or in at least one robotic vehicle of the one or more robotic vehicles and configured to detect (S6oo) an acoustic signal. A controller is communicatively coupled to the acoustic sensor. The controller is configured to: compare (S604) the detected acoustic signal to an acoustic signal library comprising one or more known acoustic signals indicative of one or more events, and perform (S6o8) an action based on the comparison.

## Description

### TECHNICAL FIELD

The disclosure relates to a monitoring system. More particularly, it relates to a monitoring system configured to monitor acoustic signals at an automated storage and retrieval system, and a method of monitoring acoustic signals at an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some cases, events or incidents can occur in an automated storage and retrieval system. Such events or incidents can adversely impact the operation of an automated storage and monitoring system and therefore have to be addressed.

### SUMMARY

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows an exemplary block diagram of an acoustic monitoring system at an automated storage and retrieval system;
Fig. 5B shows an exemplary block diagram of an alternative arrangement of the acoustic monitoring system at an automated storage and retrieval system;
Fig. 6 shows a flow chart of an exemplary process by which the acoustic monitoring system detects an acoustic signal and performs an action based on the detected acoustic signal; and
Fig. 7 shows an exemplary block diagram of another alternative arrangement of the acoustic monitoring system at an automated storage and retrieval system.

### DETAILED DESCRIPTION

In overview, the disclosure relates to a monitoring system for an automated storage and retrieval system. The monitoring system monitors acoustic signals at the automated storage and retrieval system. To do this, the monitoring system comprises an acoustic sensor that is configured to be arranged on or in at least one robotic container-handling vehicle in the automated storage and retrieval system. The acoustic sensor, such as a microphone, is configured to detect acoustic signals (e.g., sounds). These acoustic signals can be in or around the automated storage and retrieval system. The monitoring system also comprises a controller. The controller is communicatively coupled to the acoustic sensor. The controller is configured to compare the detected acoustic signal to an acoustic signal library comprising one or more known acoustic signals indicative of one or more events. These events can be in or around the automated storage and retrieval system. Such events (also referred to as incidents) can include a robotic container-handling vehicle crash, a fire, faults in robotic container-handling vehicles, earthquakes, and the like. The controller is configured to perform an action based on the comparison. In some examples, the controller can be configured to determine a match between the detected acoustic signal and a known acoustic signal in the acoustic signal library, and perform the action in response to determining the match, wherein the action is based on the match. The action can include, for example, shutting down at least a portion of the automated storage and retrieval system, scheduling a robotic container-handling vehicle for maintenance, etc. In this way, events or incidents in the automated storage and retrieval system can be readily detected by robotic container-handling vehicles traversing the automated storage and retrieval system, and identified by matching the detected acoustic signals with known acoustic signals corresponding to events in the automated storage and retrieval system, thereby providing enhanced monitoring of the automated storage and retrieval system.

### Automated storage and retrieval system overview

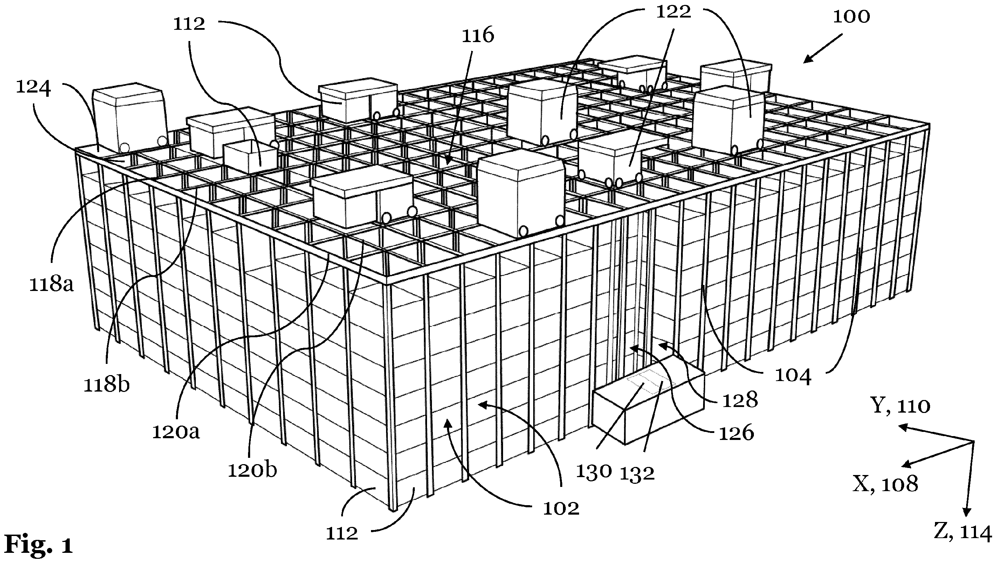

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

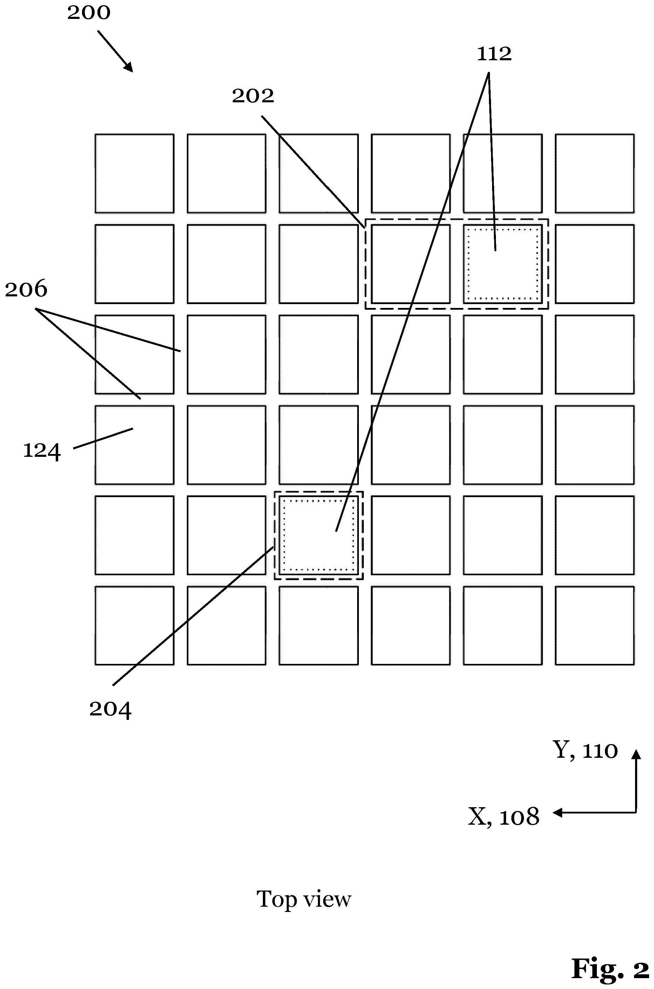

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

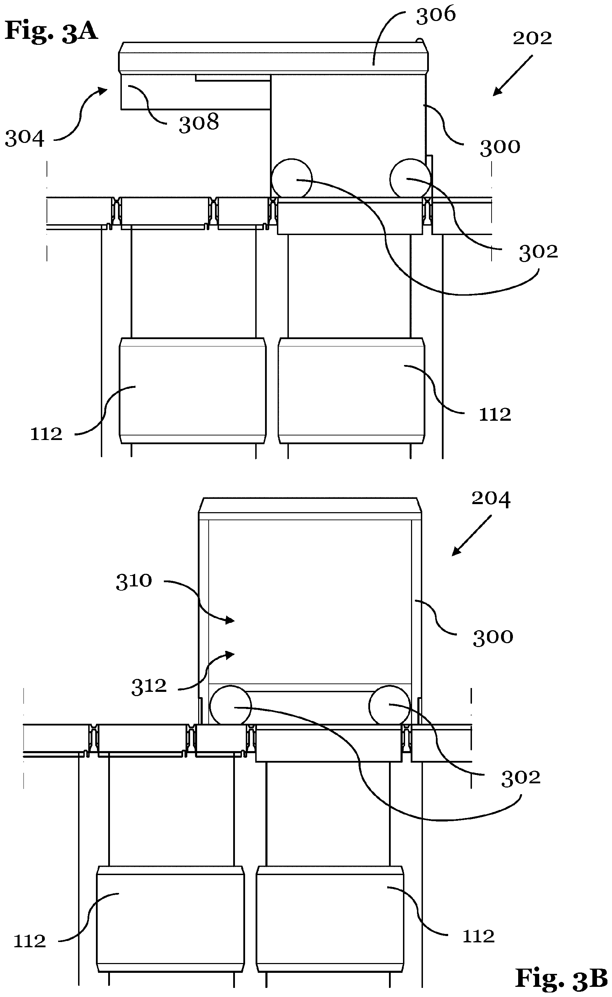

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

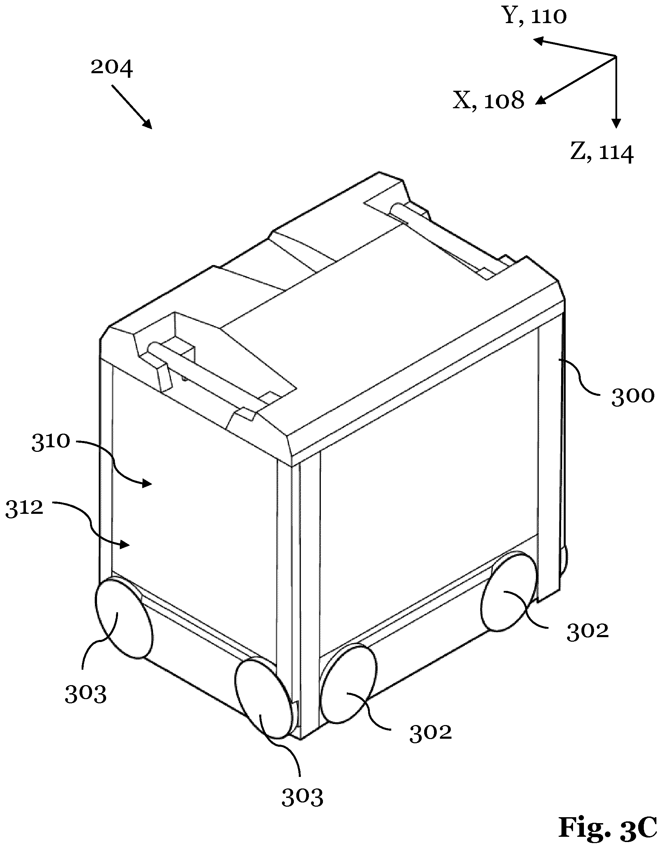

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

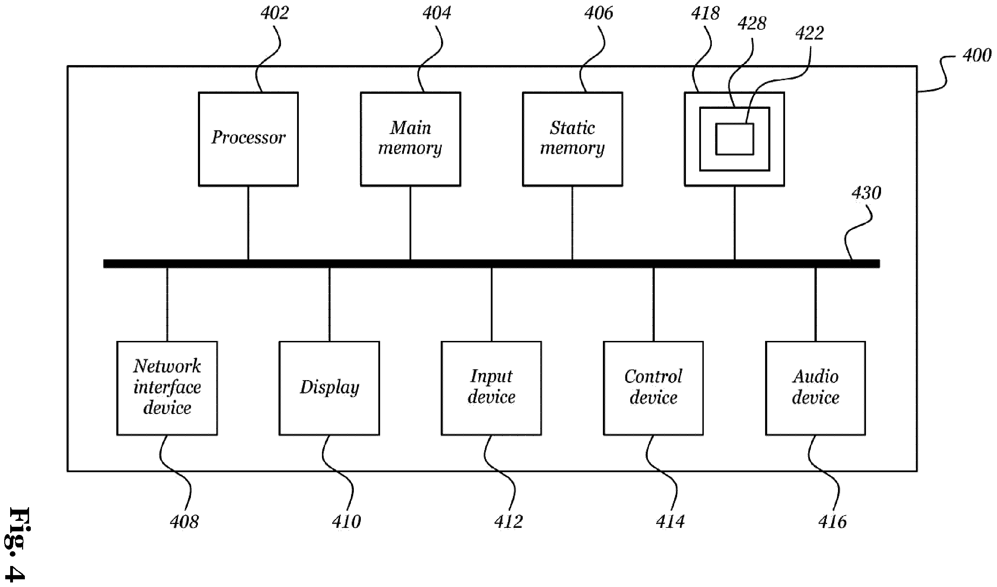

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Acoustic Monitoring

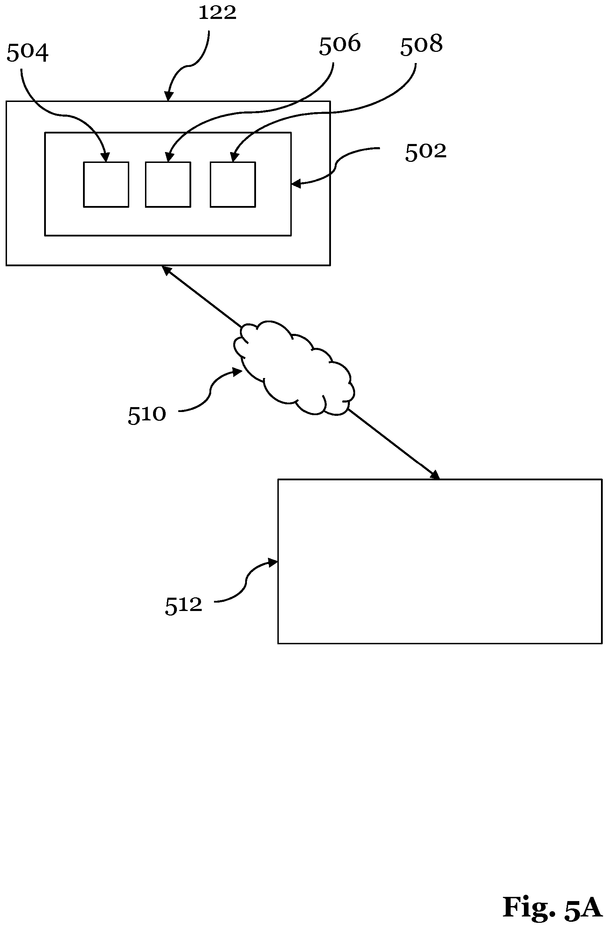

An acoustic monitoring system can be configured to monitor acoustic signals in the automated storage and retrieval system. The monitoring system can be used to detect acoustic signals and then perform an action based on the detected signal. An exemplary block diagram of such an acoustic monitoring system 502 at an automated storage and retrieval system is present in Fig. 5A.

The monitoring system 502 comprises an acoustic sensor 504 that can be arranged on or in at least one robotic container-handling vehicle 122 of the automated storage and retrieval system. For example, the robotic container-handling vehicle (hereinafter robotic container-handling vehicles are referred to as robots, for brevity) can be the 'cantilever' type of Fig. 3A or the 'internal cavity' type of Fig. 3B. The acoustic sensor 504 is configured to detect an acoustic signal. Such acoustic signals may be in or around the automated storage and retrieval system.

An acoustic signal can be considered as a sound, soundwave, or acoustic wave that propagates as a vibration through a medium.

At least one robot 122 in the automated storage and retrieval system has an acoustic sensor 504. In some examples, a plurality of robots in the automated storage and retrieval system can each have an acoustic sensor 504. In further examples, all of the robots in the automated storage and retrieval system can each have an acoustic sensor 504.

The acoustic sensor 504 can be a microphone, or a similar device, that acts as a transducer to convert an acoustic signal to an electrical signal. In some examples, the robot 122 can have one acoustic sensor 504. In other examples, the robot 122 can have more than one acoustic sensor 504, for example arranged to face in different directions relative to the robot 122. That is, reference herein to "the" or "an" acoustic sensor (singular) can also encompass more than one acoustic sensor.

The monitoring system further comprises a controller 506 that is communicatively coupled to the acoustic sensor 504. In the example of Fig. 5A, the controller 506 can be integrated into or onto the robot or robots 122 (i.e., an on-board controller). In other words, the controller 506 is a component of the robot 122. Such an on-board controller may be a discrete microprocessor or the like, or could be integrated into the main control system of the robot 122, or be a module of the main control system of the robot 122, or any other suitable arrangement. In such examples, the on-board controller can be communicatively coupled to the acoustic sensor 504 by an interface in the robot 122.

The robot 122 can communicate with the control system 512 of the automated storage and retrieval system by way of a communication channel 510. This can, for example, be a wireless communication channel. The control system 512 can be consistent with that described with reference to Fig. 4.

The controller 506 can access an acoustic signal library 508 that comprises one or more known acoustic signals that are indicative of one or more events in the automated storage and retrieval system. This is discussed in more detail subsequently. The acoustic signal library 508 can be arranged with the controller 506 (as shown in Fig. 5A), or at a remote location accessible by the controller 506.

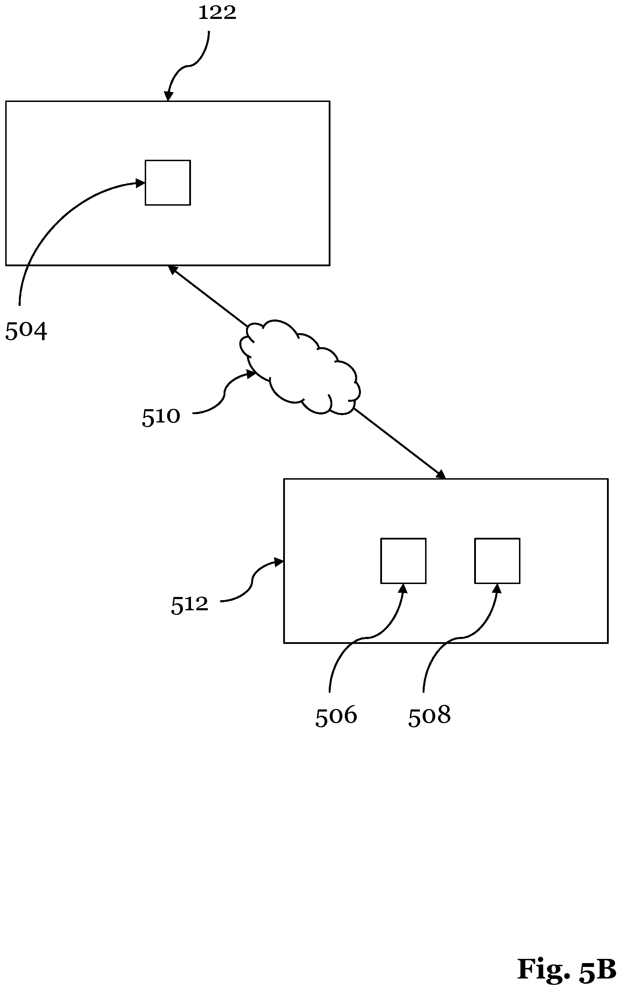

In an alternative, as shown in Fig. 5B, the controller 506 can be separate to the robot 122 (i.e., an external controller) that is component of the automated storage and retrieval system, for example in the control system 512 of the automated storage and retrieval system. The example if Fig. 5B is consistent with Fig. 5A other than in the location of the controller 506; the detail is therefore not repeated for brevity. In the example of Fig. 5B, the acoustic monitoring system comprising the acoustic sensor 504 and the controller 506 is distributed between the robot 122 and the control system 512 of the storage system. The acoustic signal library 508 can be arranged with the controller 506 (as shown in Fig. 5B), or at a remote location accessible by the controller 506.

Likewise to the example of Fig. 5A, in the alternative of Fig. 5B, the external controller can be a discrete microprocessor or the like coupled to the control system 512, or it can be integrated into the control system 512, or it could be a module of the control system 512, or any other suitable arrangement. In such examples, the external controller can be communicatively coupled to the acoustic sensor 504 by communication channel 510 between the robot 122 and the external controller, such as a wireless communication channel. In yet a further example, there can be a combination of the both the on-board controller and the external controller, in that the monitoring system can include controller(s) 506 that are component(s) of the robot(s) 122 and a controller 506 that is a component of the control system 512.

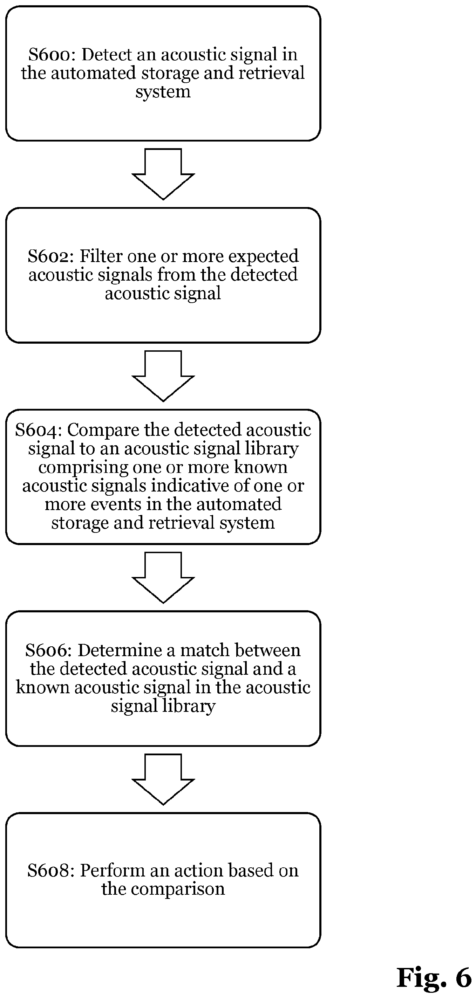

Fig. 6 depicts a flow chart of an exemplary process by which the acoustic monitoring system detects an acoustic signal and performs an action based on the detected acoustic signal.

At step S600, an acoustic signal is detected by the acoustic sensor 504. This acoustic signal can be an acoustic signal in the automated storage and retrieval system or external to the automated storage and retrieval system. For example, as the robot 122 traverses the grid and performs storage and retrieval commands, the acoustic sensor 504 can be continuously activated and detecting sounds present in and around the automated storage and retrieval system. These sounds can be indicative of normal working conditions in the system, but they can also be indicative of events such as faults or incidents in the system. The sounds or acoustic signals can also be indicative of external events such as earthquakes.

At step S602, the controller 506 can in some examples filter one or more expected acoustic signals from the detected acoustic signal, wherein the expected acoustic signals correspond to normal working sounds in and/or around the automated storage and retrieval system. Such normal working sounds may be normal working sounds of the robot 122, normal working sounds of the automated storage and retrieval system, or normal working sounds around the system for example in a warehouse (e.g., sounds of forklifts, warehouse machinery and the like). In this way, only sounds that are not indicative of normal working conditions need to be processed at the subsequent steps S604 and S606; this can improve the likelihood of accurately determining a match.

At step S604, the controller 506 compares the detected acoustic signal to the acoustic signal library 508 comprising one or more known acoustic signals indicative of one or more events. These events can be events in the automated storage and retrieval system (such as robot crashes, fires, mechanical faults and the like), or events external to the automated storage and retrieval system (such as earthquakes).

If the filtering step S602 is included, step S604 can comprise comparing the detected acoustic signal to the acoustic signal library 508 comprises comparing the filtered detected acoustic signal to the acoustic signal library 508.

In examples in which the controller 506 is an on-board controller at the robot 122 (i.e., a component of the robot), step S604 can be carried out at the robot 122. In examples in which the controller 506 is an external controller (i.e., a component external to the robot 122), the acoustic signal can be communicated from the robot 122 to the controller 506, and step S604 can then be performed externally to the robot 122. In some other examples, as will be discussed later, step S604 can be performed by a combination of both an on-board controller and an external controller.

The acoustic sensor 504 can continuously detect acoustic signals, and the controller 506 can continuously compare these to the acoustic signal library 508. In some examples, this may be achieved by recording discrete intervals of the detected sound as a function of time; for example, recording X seconds and comparing these X seconds to the acoustic signal library 508, then recording the next X seconds and comparing these X seconds to the acoustic signal library 508, and so on. In other examples, this may be achieved through a moving window approach in which a window moves across the detected sounds as a function of time and each interval partially overlaps the preceding window.

The acoustic signal library 508 can be a database of known acoustic signals associated with the automated storage and retrieval system. The acoustic signal library 508 can be stored in storage associated with / accessible by the controller 506.

The acoustic signal library 508 can store a large number of known acoustic signals that can be representative of different events in the automated storage and retrieval system. Such known acoustic signals can represent many different types of incident including examples of fires, examples of robots crashing, examples of various faults in the robots (such as mechanical or electrical faults) and/or the storage and retrieval system, examples of humans shouting (e.g., in distress), low frequency rumbles associated with earthquakes, and the like. For each type of acoustic signal, several known acoustic signals can be stored. For example, there can be several known acoustic signals of crashes. This improves the likelihood of a correct match being achieved at step S606. The known acoustic signals stored in the library can be labelled according to what type of incident they represent (e.g., "fire", "crash", etc.). The labelling can be carried out by a trained machine learning model, and/or by a human operator.

The known acoustic signals can be pre-recorded and stored in the acoustic signal library 508 in the storage associated with / accessible by the controller 506. For example, these could be acoustic signals that are known from other similar systems, and that have been labelled corresponding to the type of acoustic signal. Alternatively or additionally, these could be acoustic signals that are recorded and stored during a commissioning stage of the system.

In some examples, the acoustic signal library 508 can be continually updated. For example, new acoustic signals that are recorded as the automated storage and retrieval system operates could be labelled and added to the acoustic signal library 508 as new known acoustic signals. Alternatively/additionally, new known acoustic signals can be imported from elsewhere.

In some examples, some or all of the known acoustic signals are specific to the automated storage and retrieval system in which the monitoring system is deployed. For example, during a commissioning phase of the system, acoustic signals can be recorded, labelled, and stored in the library. Different system arrangements and different spaces in which the system is arranged can have different acoustic properties; this 'bespoke' approach to populating the acoustic signal library 508 can improve the likelihood of accurately matching a detected sound to a known sound.

In some examples, some or all of the known acoustic signals can be general known acoustic signals; for example acoustic signals that have been recorded in other automated storage and retrieval systems, and appropriately labelled corresponding to the type of incident they represent.. These need not have been specifically recorded in the specific automated storage and retrieval system in which the acoustic monitoring system is implemented. In this way, a wide source of sounds can be used without needing to specifically record and label each sound for the specific system.

In further examples, a combination of some known acoustic signals that are specific to the system and some known acoustic signals that are general between systems can populate the acoustic signal library 508.

The process continues to step S606 at which a match is determined.

At step S606, a match can in some examples be determined between the detected acoustic signal and a known acoustic signal in the acoustic signal library 508.

Matching the detected acoustic signal with a known acoustic signal can comprise comparing the detected acoustic signal with the library of known acoustic signals and identifying a closest match. A closest match can be considered as a known acoustic signal that has a highest level of similarity to the detected acoustic signal. In some examples, the closest match can be determined as a match that exceeds a threshold similarity; in this way, the likelihood of an incorrect match is reduced when the closest match does not correctly correspond to the detected acoustic signal.

In an example, the comparing and matching at steps S604 and S606 can be determined utilising audio fingerprinting. In such an example, the controller 506 can be configured to compare the detected acoustic signal to the acoustic signal library 508 by determining a fingerprint of the detected acoustic signal (for example by converting the detected acoustic signal to a fingerprint using audio fingerprinting techniques) and comparing the determined fingerprint to predetermined fingerprints corresponding to the known acoustic signals in the acoustic signal library 508. That is to say, the acoustic signal library 508 can have fingerprints of known acoustic signals stored therein, rather than the known acoustic signals themselves. In this way, a more efficient use of storage can be achieved whilst also improving the accuracy of matching. In some examples, a similarity threshold can be used for determining the closest matching fingerprint. For example a match can be determined between a fingerprint of the detected acoustic signal and the fingerprint of a known acoustic signal when the match exceeds a similarity threshold.

In another example, the controller can be configured to compare the detected acoustic signal to the acoustic signal library and determine the match between the detected acoustic signal and the known acoustic signal using a machine learning based approach. For example, machine learning can be used to train a machine learned model to identify a sound based on known sounds in a library or knowledge base.

In further alternatives, any other suitable forms of audio / acoustic matching between detected acoustic signals and known acoustic signals can be used at steps S604 and S606.

In some cases, when there is no known acoustic signal that matches the detected acoustic signal, a match might not be determined. In this case, no further action is taken, and the acoustic sensor 504 continues detecting new acoustic signals and the controller 506 continues comparing these new acoustic signals to the acoustic signal library 508.

At step S608, the controller 506 performs an action based on the comparison. The controller can in some examples perform the action in response to determining the match, wherein the action is based on the match.

In an example, the action can comprise controlling a shutdown of one or more of the robots or controlling a shutdown of at least a portion of the automated storage and retrieval system. For example, such a shutdown may be implemented when the matched known acoustic signal is an acoustic signal indicative of a crash of one or more robots or a fire in the automated storage and retrieval system. A crash may result in a robot being located in an unexpected location in the system, such as at a cell on the grid for which the robot is not expected to be. As the crashed robot is at an unexpected position, other robots could crash into it if the control system 512 is not aware of the location of the crashed robot. Shutting down the automated storage and retrieval system (or a portion thereof) can prevent further robots crashing into the crashed robot. The crashed robot can then be recovered safely before the system (or portion thereof) comes back online.

In another example, the action may comprise updating a maintenance scheduling database for the robot 122. This can take place when the matched known acoustic signal is an acoustic signal that is indicative of a fault in the robot 122. Such a fault could, for example, be a mechanical or electrical fault. When the controller 506 determines a matching known acoustic signal that is indicative of a fault in the robot 122, the controller 506 can schedule maintenance for the robot 122 to address the fault. For example, the acoustic signal could be a clicking noise, whirring noise, grinding noise or the like. Faults could also be detected in other robots based on acoustic signals detected at the acoustic sensor that have been emitted from nearby robots. Likewise, faults can be detected in the automated storage and retrieval system itself by the acoustic sensor detecting acoustic signal emitted by the automated storage and retrieval system.

In some examples, the fault can be categorised. Such categories can include critical faults and non-critical faults. When the matched known acoustic signal is indicative of a critical fault, critical maintenance can be scheduled, and the affected robot can be controlled to be taken out of service. When the matched known acoustic signal is indicative of a non-critical fault, non-critical maintenance can be scheduled, and the affected robot can continue to operate with maintenance work scheduled for the robot 122 in the future. The same principle can apply to faults detected in the automated storage and retrieval system.

In some examples, the acoustic signal library 508 can store a plurality of known acoustic signals associated with different types of fault. The controller 506 can then determine or diagnose a fault based upon the match between the detected acoustic signal and the known acoustic signal.

Step S608 can be performed by the on-board controller at the robot 122, or at the external controller for example at the control system 512 of the automated storage and retrieval system. When the action (step S608) is performed at the external controller or control system 512 of the automated storage and retrieval system, and steps S604 and S606 are performed at the on-board controller, the robot 122 can transmit information (e.g., by a wireless communication channel) pertaining to the determined matched acoustic signal to the external controller (or control system 512) so that the control system 512 of the automated storage and retrieval system can perform the requisite action.

Where appropriate, in parallel to performing step S608, the acoustic sensor 504 and controller 506 may continue performing steps S600 to S606 in order to check for subsequent matches between detected acoustic signals and the acoustic signal library 508.

When the controller does not determine a match between the detected acoustic signal and a known acoustic signal in the acoustic signal library, based on the comparison at step S604, the controller can instead perform an action that comprises adding the detected acoustic signal to an unknown acoustic signal datastore. These unknown acoustic signals can be reviewed by a human user or a trained machine learning model to determine what the unknown acoustic signal corresponds to, and if appropriate label it and add it to either the acoustic signal library, or add it to the filtering list. In some examples, the unknown acoustic signal (or similar unknown acoustic signals) can be detected more than a predetermined number of times before being flagged for review by the human user or trained machine learning model. That is, when the unknown acoustic signal or similar unknown acoustic signals are detected more than a predetermined number of times (for example, but not limited to, five times; more generally a plurality of times), they are flagged for review. This avoids every unknown sound being flagged for review, particularly if it is only heard once, or very few times.

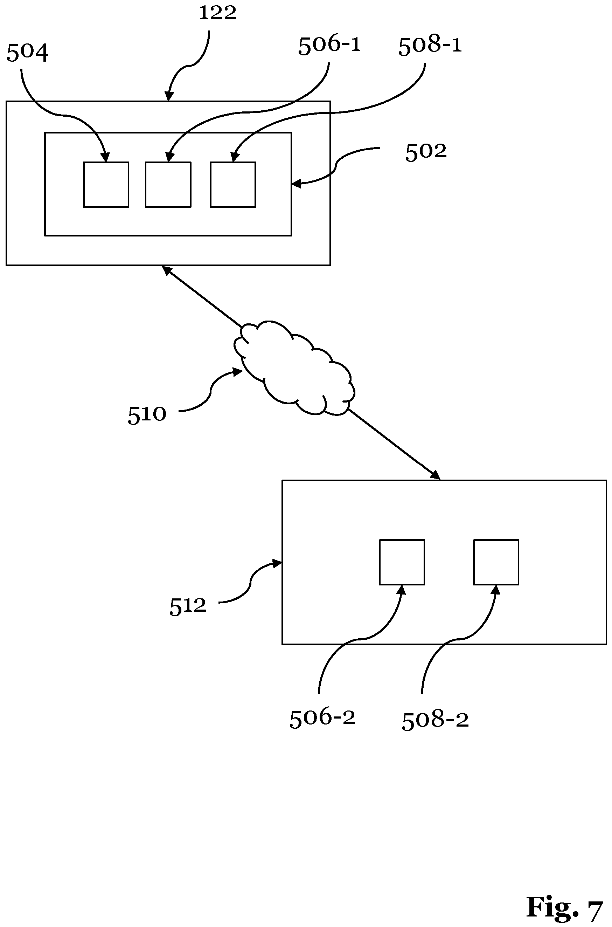

As already discussed, there can be both an on-board controller at the robot 122 and an external controller that is external to the robot 122 (e.g., at, or in communication with, the control system 512 of the automated storage and retrieval system). An exemplary arrangement for this is depicted in the block diagram of Fig. 7; in Fig. 7 reference numerals correspond to those of corresponding features in Figs. 5A and 5B, and the detail regarding these corresponding features is not repeated for brevity. In this arrangement, Steps S604 and S606 can be distributed between the on-board controller 506-1 and the external controller 506-2.

In such an example, at step S604, the on-board controller 506-1 can compare the detected acoustic signal to an acoustic signal library 508-1 that comprises sounds indicative of critical incidents. Such critical incidents may include a robot and/or robots crashing, fire, or the like. Correspondingly, the acoustic signal library 508-1 of critical incident sounds may include a collection of sounds of robots crashing and a collection of sounds of fire. The acoustic signal library 508-1 of critical incident sounds may be arranged at the robot 122.

When the on-board controller 506-1 determines such a match, the action can comprise sending a communication to the control system 512 of the automated storage and retrieval system alerting the control system 512 of the critical incident. The control system 512 can then shutdown one or more robots and/or a portion of the system in the region of the robot 122 that detected the sound indicative of a critical incident, or shutdown all of the robots or all of the system.

When the on-board controller 506-1 does not determine a match between the detected acoustic signal and the acoustic signal library 508-1 that comprises sounds indicative of critical incidents, the on-board controller can transmit the acoustic signal to the external controller 506-2 for further processing. This can be, for example, by a wireless channel 510 between the robot 122 and the external controller 506-2. The external controller 506-2 can compare the detected acoustic signal to an acoustic signal library 508-2 that comprises one or more known acoustic signals indicative of non-critical incidents. Such non-critical incidents can include non-critical faults in the robot 122, for example. Then, the external controller 506-2 can determine a match between known non-critical acoustic signal and the detected acoustic signal and perform a requisite action such as scheduling the robot 122 for maintenance. The acoustic signal library 508-2 of non-critical incident sounds may be arranged at the control system 512, or accessible by the control system 512.

The detection and matching of critical incidents can be performed immediately at the robot 122, allowing for a quick reaction to critical incidents. On the other hand, the off-loaded detection and matching of non-critical incidents at the control system 512 may not be performed immediately; for example, it may be performed in a batch or when computing resources are available. In this way, a quick detection and reaction can be made to critical incidents, whilst at the same time reducing processing requirements at the robot 122 by off-loading the detection and reaction to non-critical incidents to the control system 512.

As discussed above, examples which refer to matching acoustic signals or transmitting acoustic signals can also be considered as matching acoustic signal fingerprints. Likewise, when transmitting acoustic signals between the robot 122 and the external controller is discussed, such examples could instead include transmitting acoustic signal fingerprints.

The filtering at step S602 can also include further filtering to enhance the detection of new or changing acoustic signals. When the acoustic signal is detected at step S600, the controller 506 can update an expected acoustic signal library by adding the detected acoustic signal to the expected acoustic signal library. Then, subsequently detected signals can be filtered using the expected acoustic signal library. In this way, acoustic signals that change as a function of time can be detected. This enhances the detection of both new acoustic signals and changing acoustic signals, and therefore can be particularly useful in monitoring the robot 122 or system for faults. For example, if there is a noise that is indicative of a fault, and this noise is changing, it can be possible to interpret that the fault is worsening. In such a case, the robot 122 or system component can be scheduled for maintenance. On the other hand, if there is a noise that is indicative of a fault, and this noise is not changing, it can be filtered out as the noise not changing can be interpreted as meaning the fault is not worsening. The expected acoustic signal library can be included in the acoustic signal library 508, or can be separate thereto.

In some examples, the acoustic sensor 504 can be a directional microphone. The controller 506 can be configured to determine a direction of a source of the detected acoustic signal using directional information from the directional microphone. Using information on the position and orientation of the robot 122, as well as the determined direction of the source of the detected acoustic signal, an approximate location of the source of the detected acoustic signal in the automated storage and retrieval system can be determined. This can allow for the controller 506 to determine the location of an incident, such a robot crash or fire.

In a further modification to this, the locating of the source of the detected acoustic signal can be enhanced using at least two directional microphones arranged on at least two robots and communicatively coupled to the controller 506. The controller 506 can perform triangulation to determine a location of a source of the detected acoustic signal when the at least two directional microphones detect corresponding acoustic signals by using directional information from the at least two directional microphones and known locations of the at least two robots in the automated storage and retrieval system. In this way, a precise location of the detected incident in the automated storage and retrieval system can be determined. This allows for a more granular response in the action taken at step S608. For example, if the incident is a robot crash, the system may only need to be shutdown in a region around the determined location of the crash, rather than shutting down the entire system or a larger area of the system. This can enhance operational efficiency. In such a process, the controller 506 can be an on-board controller at one of the robots, on-board controllers at both of the robots, or an external controller for example at the control system 512 of the automated storage and retrieval system. The robots can transmit the detected acoustic signals and directionality information to one-another as needed, or to the controller 506, such that the triangulation step can be performed by at least one of these controllers.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A monitoring system configured to monitor acoustic signals at an automated storage and retrieval system in which one or more robotic vehicles move, the monitoring system comprising:
an acoustic sensor configured to be arranged on or in at least one robotic vehicle of the one or more robotic vehicles and configured to detect an acoustic signal; and
a controller communicatively coupled to the acoustic sensor, wherein the controller is configured to:
compare the detected acoustic signal to an acoustic signal library comprising one or more known acoustic signals indicative of one or more events; and
perform an action based on the comparison.

2. The monitoring system of claim 1, wherein the controller is further configured to:
when the controller determines a match between the detected acoustic signal and a known acoustic signal in the acoustic signal library, perform the action in response to determining the match, wherein the action is based on the match.

3. The monitoring system of any preceding claim, wherein the action comprises controlling a shutdown of one or more of the robotic vehicles or controlling a shutdown of at least a portion of the automated storage and retrieval system; and optionally:
wherein the matched known acoustic signal is an acoustic signal indicative of a crash of one or more robotic vehicles or a fire in the automated storage and retrieval system.

4. The monitoring system of any preceding claim, wherein the action comprises updating a maintenance scheduling database for the robotic vehicle; and optionally:
wherein the matched known acoustic signal is indicative of a fault in the robotic vehicle or automated storge and retrieval system.

5. The monitoring system of any preceding claim, wherein the controller is an on-board controller in the robotic vehicle; and optionally:
wherein the acoustic signal library comprises one or more known acoustic signals indicative of critical incidents, and the action is performed when the detected acoustic signal matches an acoustic signal indicative of a critical incident.

6. The monitoring system of any preceding claim, wherein the monitoring system further comprises a second controller that is separate to the robotic vehicle, and the detected acoustic signal is transmitted to the second controller; and optionally:
wherein the detected acoustic signal is compared, by the second controller, to a second acoustic signal library that comprises one or more known acoustic signals indicative of non-critical incidents.

7. The monitoring system of any preceding claim, wherein when the controller is further configured to:
when the controller does not determine a match between the detected acoustic signal and a known acoustic signal in the acoustic signal library, perform an action comprising adding the detected acoustic signal to an unknown acoustic signal datastore.

8. The monitoring system of any preceding claim, wherein the controller is further configured to:
filter one or more expected acoustic signals from the detected acoustic signal, wherein the expected acoustic signals correspond to normal working sounds in or around the automated storage and retrieval system, and comparing the detected acoustic signal to the acoustic signal library comprises comparing the filtered detected acoustic signal to the acoustic signal library.

9. The monitoring system of any preceding claim, wherein the controller is further configured to:
update an expected acoustic signal library by adding the detected acoustic signal to the expected acoustic signal library; and
filter subsequent detected acoustic signals using the updated expected acoustic signal library to identify changing acoustic signals as a function of time.

10. The monitoring system of any preceding claim, wherein the controller is configured to compare the detected acoustic signal to the acoustic signal library by determining a fingerprint of the detected acoustic signal and comparing the determined fingerprint to predetermined fingerprints corresponding to the known acoustic signals in the acoustic signal library; and/or
wherein the controller is configured to compare the detected acoustic signal to the acoustic signal library and determine the match between the detected acoustic signal and the known acoustic signal using a machine learning based approach.

11. The monitoring system of any preceding claim, wherein the acoustic sensor is a directional microphone, and the controller is configured to determine a direction of a source of the detected acoustic signal using directional information from the directional microphone.

12. The monitoring system of any preceding claim, wherein the acoustic sensor comprises at least two directional microphones respectively arranged on or in at least two robotic vehicles and communicatively coupled to the controller, the at least two directional microphones configured to detect acoustic signals in the automated storage and retrieval system, and wherein the controller is further configured to:
perform triangulation to determine a location of a source of the detected acoustic signal when the at least two directional microphones detect corresponding acoustic signals by using directional information from the at least two directional microphones and known locations of the at least two robotic vehicles in the automated storage and retrieval system.

13. A robotic vehicle configured for use in an automated storage and retrieval system in which one or more robotic vehicles move, wherein the robotic vehicle comprises:
an acoustic sensor configured to be arranged on or in at least one robotic vehicle of the one or more robotic vehicles and configured to detect an acoustic signal; and
a controller communicatively coupled to the acoustic sensor, wherein the controller is configured to:
compare the detected acoustic signal to an acoustic signal library comprising one or more known acoustic signals indicative of one or more events; and
perform an action based on the comparison.

14. A method of monitoring acoustic signals at an automated storage and retrieval system in which one or more robotic vehicles move, the method comprising:
detecting, by an acoustic sensor arranged on or in at least one robotic vehicle of the one or more robotic vehicles, an acoustic signal;
comparing, by a controller, the detected acoustic signal to an acoustic signal library comprising one or more known acoustic signals indicative of one or more events; and
performing an action based on the comparison.

15. A non-transitory computer-readable medium storing instructions that when executed by one or more processors cause the one or more processors to:
detect, by an acoustic sensor arranged on or in at least one robotic vehicle of an automated storage and retrieval system in which one or more robotic vehicles move, an acoustic signal;
compare the detected acoustic signal to an acoustic signal library comprising one or more known acoustic signals indicative of one or more events; and
performing an action based on the comparison.
